# EUROPEAN PATENT SPECIFICATION

(11) **EP 2 457 987 B1**
(45) Date of publication and mention of the grant of the patent: **06.08.2014**
(21) Application number: 11817289.9
(22) Date of filing: 25.08.2011
(51) Int. Cl.: C11C 3/10, C11B 7/00, C11C 3/00, A23D 9/00, A23D 9/007

(54) **METHOD FOR PRODUCING TRI-SATURATED FATTY ACID GLYCERIDE-CONTAINING FAT COMPOSITIONS**
VERFAHREN ZUR HERSTELLUNG DREIFACH GESÄTTIGTER FETTSÄUREGLYCERIDHALTIGER FETTZUSAMMENSETZUNGEN
PROCÉDÉ DE PRODUCTION DE COMPOSITIONS DE GRAISSES CONTENANT DES GLYCÉRIDES D'ACIDES GRAS TRI-SATURÉS

(30) Priority: 10.09.2010 JP 2010203523
(43) Date of publication of application: 30.05.2012
(73) Proprietor: Kaneka Corporation, Osaka-shi, Osaka 530-8288 (JP)
(72) Inventor: TANAKA Tatsushi, Takasago-shi Hyogo 676-8688 (JP); MIYASHITA Yuji, Takasago-shi Hyogo 676-8688 (JP)
(74) Representative: HOFFMANN EITLE
(86) International application number: PCT/JP2011/069180
(87) International publication number: WO 2012/032945

(56) References cited:
- WO-A1-96/14756
- WO-A1-2009/028154
- JP-A- 51 112 555
- JP-A- 59 174 700
- JP-A- 2008 022 744
- JP-A- 2010 077 244
- DATABASE FSTA [Online] INTERNATIONAL FOOD INFORMATION SERVICE (IFIS), FRANkFURT-MAIN, DE; 1973, SUZUKI T ET AL: "Determination of solid fat and water content of margarine by high resolution NMR. (translated)", XP002693033, Database accession no. FS-1973-12-N-0636 & SUZUKI T ET AL: JOURNAL OF JAPAN OIL CHEMISTS' SOCIETY, vol. 19, no. 11, 1970, page 1019,

## Description

### Technical Field

The present invention relates to a method for producing an oil using an oil composition containing trisaturated fatty acid glycerides (SSS) at high content.

### Background Art

Fractionation technologies of separating high- and low-melting point components from each other have been used as a process technology for obtaining an oil having physical properties suited for a specific application from edible solid oils such as palm oil. However in production of low-melting point oils by fractionation step, byproduct oils containing trisaturated fatty acid glycerides (SSS) at high content, which have much higher melting points, could not find many useful applications as they are.

Examples of the methods of using SSSs as a raw edible oil material include a method for preparing a hard stock by mixing a high-SSS-content oil with an liquid oil in such a manner that the content of the saturated fatty acids and the unsaturated fatty acids become respectively in the ranges of 55 to 85 wt % and 15 to 45 wt % in all the constituent fatty acids, randomly interesterifying the mixture, and separating the soft region "hard stock" (Patent Document 1) by fractionation, a method for obtaining an oil composition containing intermediate-melting-point oil by interesterifying an oil mixture consisting of a high-SSS-content extremely hardened oil and an unsaturated fatty acid or an unsaturated fatty acid alkyl ester with a lipase, separating the triglyceride mixture from reaction product obtained, and separating the low-melting point oil and the high-SSS-content high-melting point oil from triglyceride by fractionation of the triglyceride mixture (Patent Document 2) and the like.

However, although a method for using SSSs was described in Patent Document 1, there was sufficiently shown no method that is advantageous from the point of cost of raw materials. In addition, if the SSSs generated in fractionation after interesterification are used repeatedly as a raw material oil, it may cause problems such as deterioration in taste and color development of the hard stock obtained.

Patent Document 2 discloses a method for interesterifying the high melting point oil that is separated by fractionation once with an unsaturated fatty acid or an unsaturated fatty acid alkyl ester again. However, the unsaturated fatty acids and the unsaturated fatty acid alkyl esters used as a raw material in Patent Document 2 are expensive and the steps of separating triglyceride mixture from the interesterification reaction product and removing low- and high-melting point oils from the triglyceride mixture, for example, are complicated and demand large cost. Thus, the method described in Patent Document 2 is not practical.

### Citation List

### Patent Literature

Patent Document 1: JP-A No. 2010-77244
Patent Document 2: JP-A No. 10-25491

### Summary of Invention

### Technical Problem

An object of the present invention is to provide a method for producing a trisaturated fatty acid glyceride-containing oil composition that is cheap, less colored, and superior in oxidative stability and taste, by using an oil containing trisaturated fatty acid glycerides (SSS) at high content as a raw material.

### Solution to Problem

After intensive studies to solve the problems above, the inventors have found that it is possible to obtain an oil composition less colored and favorable in oxidative stability and taste, by interesterifying the mixture of a high-SSS-content oil and an oil having a high iodine value with a lipase, crystallizing the mixture to a particular amount of solid oil content and fractionating the resulting mixture in production process for obtaining a low-melting oil after fractionation step, and made the present invention.

The inventors also found that it is possible to use the solid oil obtained as byproduct when the liquid low-melting point oil is separated by fractionation as the high-SSS-content oil described above.

Accordingly, a first aspect of the present invention relates to a method for producing a trisaturated fatty acid glyceride-containing oil composition with SSSs in an amount of 2 to 13 wt % and SSUs and SUSs in a total amount of 34 to 54 wt % in the entire oil composition and having a (total content of SSU and SUS)/SSS content ratio (by weight) of 4 to 20 and a SSU content/SUS content weight ratio of 1 or more, comprising: a step (1) of preparing an oil mixture containing saturated fatty acids (S) in an amount of 45 to 75 wt % and unsaturated fatty acids (U) in an amount of 25 to 55 wt % in all constituent fatty acids by mixing an oil containing SSSs in an amount of 35 wt % or more with an oil having an iodine value of 35 or more; a step (2) of interesterifying the oil mixture with a lipase; a step (3) of obtaining an oil containing liquid and solid oils by crystallizing the oil mixture without use of solvent until the value (X-Y), wherein X is the SSS content (wt %) of the oil after interesterification and Y is the solid oil content (%) during crystallization, becomes 2 to13; and a step (4) of separating the liquid oil by fractionation of the oil (wherein, SSS represents a trisaturated fatty acid glyceride; SSU represents a 1,2-disaturated fatty acid-3-monounsaturated fatty acid glyceride (including the optical isomers thereof); and SUS represents a 1,3-disaturated fatty acid-2-monounsaturated fatty acid glyceride).

Another favorable aspect of the invention relates to the method for producing a trisaturated fatty acid glyceride-containing oil composition, wherein palmitic acid (P) is contained in an amount of 50 wt % or more in all constituent fatty acids in the oil containing SSSs in an amount of 35 wt % or more. A more favorable aspect of the invention relates to the method for producing a trisaturated fatty acid glyceride-containing oil composition, wherein the oil having an iodine value of 35 or more is an oil containing palm oil and/or a fractionated palm oil in an amount of 60 wt % or more. A yet another aspect of the invention relates to the method for producing a trisaturated fatty acid glyceride-containing oil composition, wherein the solid oil separated by fractionation in step (4) is used as the oil containing SSSs in an amount of 35 wt % or more.

### Advantageous Effect of Invention

It is possible according to the present invention to provide a method for producing a trisaturated fatty acid glyceride-containing oil composition that is cheap, less colored, and superior in oxidative stability and taste by using an oil containing trisaturated fatty acid glycerides (SSS) in a greater amount.

### Description of Embodiments

The present invention relates to a method for producing a trisaturated fatty acid glyceride-containing oil composition with SSSs in an amount of 2 to 13 wt % and SSUs and SUSs in a total amount of 34 to 54 wt % in the entire oil composition and having a (total content of SSU and SUS)/SSS content ratio (by weight) of 4 to 20 and a SSU content /SUS content weight ratio of 1 or more, comprising mixing an oil containing SSSs in an amount of 35 wt % or more with an oil having an iodine value of 35 or more, interesterifying the mixture, and fractionating the mixture under a particular condition.

In the present invention, the structures of oil are expressed as follows:
SSS: trisaturated fatty acid glyceride
SSU: 1,2-disaturated fatty acid-3-monounsaturated fatty acid glyceride (including optical isomers)
SUS: 1,3-disaturated fatty acid-2-monounsaturated fatty acid glyceride

### <Step of obtaining an oil containing SSSs in an amount of 35 wt % or more>

The method for obtaining an oil containing SSSs in an amount of 35 wt % or more is not particularly limited, and the oil obtained as byproduct during production of a low-melting oil after the fractionation step may be used. For example, an oil mixture having a (total content of SSU and SUS)/SSS content weight ratio of 1 to 4 and a SSU content/SUS content weight ratio of 1 or more, and containing SSSs in an amount of 8 to 35 wt % and SSUs and SUSs in a total amount of 25 to 45 wt % is used as raw material; the raw material is interesterified by a common method; the mixture is crystallized without use of solvent, until the difference (X-Y) between the SSS content (X, wt %) of the oil after interesterification and the solid oil content (Y, %) during crystallization becomes 2 to13; and the liquid phase is obtained as fractionated byproduct. The SSS content of the oil thus obtained is not particularly limited, if it is 35 wt % or more in the entire oil, but it is preferably 35 to 90 wt %, more preferably 35 to 80 wt %.

Examples of the edible oil used in the oil mixture that is subjected to the interesterification include interesterified oils of palm oil and fractionated palm oils, interesterified oils of soy bean oil, rapeseed oil, sunflower oil, lard, beef tallow and others with the extremely hardened oils thereof and the like, but palm oil, fractionated palm oils, and the interesterified oils thereof are preferable from the point of price, and palm oil is more preferable.

### <Preparation of oil mixture (step (1))>

The oil containing SSSs in an amount of 35 wt % or more thus obtained and an oil having an iodine value of 35 or more are mixed with each other, to give an oil containing saturated fatty acids (S) in an amount of 45 to 75 wt % and unsaturated fatty acids (U) in an amount of 25 to 55 wt % in all the constituent fatty acids. If the S and U contents are not within the ranges above, it may not possible to obtain a desired oil composition after fractionation. It is possible to adjust the S and U contents easily by determining the fatty acid compositions of the oil containing SSSs in an amount of 35 wt % or more and the oil having an iodine value of 35 or more. It is thus possible to make the S and U contents in the ranges above, by adjusting the blending rate of the oil containing SSSs in an amount of 35 wt % or more and the oil having an iodine value of 35 or more, based on the measurement results above.

The oil having an iodine value of 35 or more is not particularly limited, if it has an iodine value of 35 or more, but it is preferably an oil having an iodine value of 35 to 80, more preferably an oil having an iodine value of 35 to 70.

The oil having an iodine value of 35 or more is not particularly limited in its kind, and examples thereof include palm oil, fractionated palm oils, rapeseed oil, soy bean oil, sunflower oil, cone oil, lard, beef tallow and the like, but use of palm oil or a fractionated palm oil is preferable from the point of price.

Alternatively, the oil mixture obtained by mixing the oil containing SSSs in an amount of 35 wt % or more with the oil having an iodine value of 35 or more preferably contains saturated fatty acids (S) in an amount of 50 to 70 wt % and unsaturated fatty acids (U) in an amount of 30 to 50 wt % in all the constituent fatty acids.

### <Interesterification (step (2))>

The oil mixture thus obtained can be interesterified by a common method. However, if SSSs are subjected to interesterification repeatedly, the interesterification is preferably carried out with a lipase for prevention of accumulation of color development and taste degradation. That is, if SSSs obtained after repeated interesterification and fractionation are used as an oil containing SSSs in an amount of 35 wt % or more, it is unfavorable to use a base catalyst such as sodium methylate, because it may lead to accumulation of color-developing and taste-degrading components. The lipase for use is not particularly limited in kind, if it is a lipase used for interesterification of triglycerides, but when palm oil is used as the raw material, use of a lipase showing interesterification activity not only at 1 and 3 positions but also at 2 position is preferable for reduction of symmetric SUS triglycerides. Typical examples thereof include lipases derived from Thermomyces species and Alcaligenes species.

### <Crystallization (step (3))>

When the content of the SSSs contained in the oil after interesterification is expressed by X (wt %) and the solid oil content during crystallization by Y (%), the crystallization is preferably carried out in such a manner that the value X-Y becomes in the range of 2 to 13, preferably 2 to 10. It is possible to obtain the trisaturated fatty acid glyceride-containing oil composition according to the present invention easily by fractionating the mixture after crystallization. When the (X-Y) value is smaller than 2, since the fractionated liquid phase has smaller SSS content, when the oil composition is used as a plastic oil material, the temperature resistance thereof may be reduced; and since SSUs are also crystallized partially, the fractionation efficiency is reduced, leading to reduction of the yield of the trisaturated fatty acid glyceride-containing oil composition. Alternatively, when the (X-Y) value is larger than 13, when the oil composition is used as a plastic oil material, it may show deteriorated mouth melting characteristics. In order to make the (X-Y) value 2 to 13, it is preferable to make the crystallization temperature approximately 2°C to 14°C lower than the melting point of the raw material oil used for crystallization, although the temperature may depends on the kind of the oil mixture used for interesterification. The solid oil content is monitored properly during crystallization over a period of approximately 5 to 48 hours, and the mixture can be fractionated any time when the (X-Y) value is between 2 and 13. The crystallization gives an oil having a liquid phase and a solid phase.

### <Fractionation (step (4))>

It is possible to obtain the oil composition according to the present invention by isolating the liquid phase by fractionation of the crystallized oil above by a common method. In the present invention, the fractionation is preferably a dry fractionation using no solvent from the viewpoints of stability and cost. It is possible to obtain the trisaturated fatty acid glyceride-containing oil composition according to the present invention easily, when the temperature during fractionation is approximately in the range of the crystallization temperature±3°C. Fractionation efficiency is normally lower by dry fractionation, but it is possible to obtain a desired trisaturated fatty acid glyceride-containing oil composition easily and efficiently by the production method according to the present invention, even when an oil containing SSSs in an amount of 35 wt % or more is used as the raw material.

The trisaturated fatty acid glyceride-containing composition according to the present invention is characterized by containing SSSs in an amount of 2 to 13 wt %, preferably 3 to 10 wt %, and SSUs and SUSs in a total amount of 34 to 54 wt %, preferably 35 to 50 wt % in the entire oil composition, and having a (total content of SSU and SUS)/SSS content weight ratio of 4 to 20, preferably 5 to 13, and a SSU content/SUS content weight ratio of 1 or more, preferably 1 to 3.

A SSS content above of less than 2 wt % may lead to deterioration in fractionation efficiency and also in the stability of shape as a plastic oil material, while a SSS content of more than 13 wt % may lead to deterioration in mouth melting characteristics as a plastic oil material. Alternatively, a total content of SSU and SUS above of less than 34 wt % may lead to decrease of crystallization speed and increased change of the physical properties over time as a plastic oil material, while a total content of SSU and SUS of more than 54 wt % may lead to hardening of the composition and deterioration in plasticity as a plastic oil material.

If the (total content of SSU and SUS)/SSS content weight ratio is smaller than 4, the composition contains much SSSs and shows unfavorable mouth melting characteristics when used as a plastic oil material or gives a soft oil lower in crystallization speed, as the total amount of SSSs, SSUs and SUSs becomes smaller, while if the weight ratio is more than 20, the composition gives bulky crystals, because there are relatively fewer SSSs that serve as crystalline nucleus, leading to deterioration in physical properties when used as a plastic oil material.

If the SSU content/SUS content weight ratio is less than 1, the amount of SUSs is larger than that of SSUs, which unfavorably leads to decrease of crystallization speed and increase of the change in physical properties over time.

The trisaturated fatty acid glyceride-containing composition according to the present invention can be used as an edible oil raw material in various applications including water-in-oil emulsified compositions such as roll-in margarine, oil-in-water emulsified compositions such as whip cream, and shortenings and chocolates.

### Examples

Hereinafter, the present invention will be described in more detail specifically with reference to Examples, but it should be understood that the present invention is not restricted by these Examples at all. The "part" and "%" in Examples are those by weight.

### <Measurement of SSS content and total content of SSU and SUS>

The triglyceride content in the compositions obtained in Examples and Comparative Examples was determined in accordance with the "AOCS Official Method Ce 5c-93," by high-speed liquid chromatography (HPLC) of using an ODS column.

### <Analysis of SSU content/SUS content weight ratio>

The SSU content/SUS content weight ratio was determined by HPLC of using a silver nitrate column. The analysis was made in accordance with the method described in "Journal of the American Oil Chemists Society, 68, 289-293, 1991."

### <Measurement of iodine value>

The iodine value was determined in accordance with the "Standard Methods for the Analysis of Fats, Oils and Related Materials 2.3.4.1-1996, Japan Oil Chemists' Society."

### <Measurement of fatty acid composition>

The fatty acid composition was determined by FID constant-temperature gas chromatography. The FID constant-temperature gas chromatography is the method described in the "Standard Methods for the Analysis of Fats, Oils and Related Materials 2.2.2.1-1996, Japan Oil Chemists' Society."

### <Measurement of solid oil content>

The solid oil content was determined by using a Minispec series "mq20 NMR Analyzer (analytical software: BRUKER the MINISPEC)" manufactured by BRUKER, as the oil during crystallization was pipetted into a test tube previously heated to the temperature identical with the crystallization temperature.

### <Evaluation of color>

The color, as lovibond value, of the oil compositions obtained in Examples and Comparative Example was determined in accordance with the method described in "Standard Methods for the Analysis of Fats, Oils and Related Materials 2.2.1.1-1996, Japan Oil Chemists' Society" and the measured value was used as the evaluation value. When the evaluation value is 30 or less, the oil composition is less discolorated and has favorable color, and the degree of discoloration is smaller when the evaluation value is smaller.

### <Evaluation of the oxidative stability of oil composition>

The oxidative stability of the oil compositions obtained in Examples and Comparative Example was evaluated in CDM test. The test was performed in accordance with the method described in the "Standard Methods for the Analysis of Fats, Oils and Related Materials 2.5.1.2-1996, Japan Oil Chemists' Society." When the induction period observed in the CDM test is 10 hours or more, the oil has favorable oxidative stability, and when the induction period is longer, the oxidative stability is higher.

### <Evaluation of the taste of oil>

The taste of the oil compositions obtained in Examples and Comparative Example was performed by organoleptic evaluation. The evaluation criteria used then are as follows:
A: favorable taste without no foreign taste or odor
B: without no foreign taste or odor
C: with slight foreign taste or odor
D: with foreign taste or odor.

### (Example 1)

### <Production process for oil containing SSSs in an amount of 35 wt % or more>

50 wt parts of extremely hardened rapeseed oil and 50 wt parts of rapeseed oil were mixed with each other; the mixture was heated to 90°C under a reduced pressure of 500 Pa; 0.2 wt part of sodium methylate was added thereto for interesterification; the interesterified oil was washed with water and decolorized over 2 wt parts of white earth at 90°C under a reduced pressure of 500 Pa. The oil was heated to 70°C for complete solubilization and crystallized at 49°C under agitation for 24 hours. The oil after crystallization was filtered in a filter press at 3.0 MPa, to give a solid oil containing SSSs (palmitic acid content: 8 wt %) at a rate of 78 wt %.

### <Production process for oil mixture>

15 wt parts of the solid oil thus obtained was mixed with 85 wt parts of an oil having an iodine value of 53 (mixed oil of an extremely hardened rapeseed oil and rapeseed oil at a rate of 44:56), to give an oil mixture (S content: 52 wt % and U content: 48 wt % in all constituent fatty acids).

### <Interesterification step with lipase>

The oil mixture was interesterified with a lipase (Lipozyme TL-IM manufactured by Novozymes), to give an oil A1. The SSS content (X) in the oilAl was 13.4 wt %.

### <Crystallization step>

The oil A1 was heated to 70°C for complete solubilization and crystallized at 49°C under agitation for 24 hours. The solid oil content (Y) then was 8.6%. Accordingly, the (X-Y) value then was 4.8 (Table 1).

### <Fractionation step>

The oil after crystallization was filtered in a filter press at 3.0 MPa, to give a mixed solid oil containing SSSs at a rate of 77 wt % and a liquid oil. The liquid oil was deodorized at 240°C under a reduced pressure of 200 Pa, to give an oil composition 1. The yield and the triglyceride composition of the oil composition 1 obtained are summarized in Table 1.

### <Recycle step of solid oil>

15 wt parts of the solid oil thus obtained was mixed with 85 wt parts of an oil having an iodine value of 53 (mixed oil of an extremely hardened rapeseed oil and rapeseed oil at a rate of 44:56), to give an oil mixture (S content: 52 wt % and U content: 48 wt % in all constituent fatty acids). The oil mixture was interesterified with a lipase (Lipozyme TL-IM manufactured by Novozymes), to give an oil A1'. The SSS content (X) of the oil A1' was 13.1 wt %.

The oil A1' was heated to 70°C for complete solubilization and crystallized at 49°C under agitation for 24 hours. The solid oil content (Y) then was 8.3%. Accordingly, the (X-Y) value then was 4.8 (Table 1). The oil after crystallization was filtered in a filter press at 3.0 MPa, to give a liquid oil. The liquid oil obtained was deodorized at 240°C under a reduced pressure of 200 Pa, to give an oil composition 1'. The triglyceride composition of the oil composition 1' obtained is shown in Table 1.

### (Example 2)

### <Production process for oil containing SSSs in an amount of 35 wt % or more>

An oil obtained by mixing 75 wt parts of palm oil, 15 wt parts of an extremely hardened rapeseed oil and 10 wt parts of rapeseed oil and interesterifying the mixture with a lipase (Lipozyme TL-IM manufactured by Novozymes) was heated to 70°C for complete solubilization and crystallized at 34°C under agitation for 24 hours. The oil after crystallization was filtered in a filter press at 3.0 MPa, to give a solid oil containing SSSs (containing 46 wt % palmitic acid) at a rate of 38 wt % and a liquid oil.

### <Production process for oil mixture>

40 wt parts of the solid oil thus obtained was mixed with 60 wt parts of an oil having an iodine value of 67 (mixed oil of an extremely hardened rapeseed oil, palm stearin, and rapeseed oil at a weight rate of 13:40:47), to give an oil mixture (S content: 51 wt %, U content: 48 wt %).

### <Interesterification step with lipase>

The oil mixture was interesterified with a lipase (Lipozyme TL-IM manufactured by Novozymes), to give an oil A2. The SSS content (X) in the oil A2 was 12.8 wt %.

### <Crystallization step>

The oil A2 was heated to 70°C for complete solubilization and crystallized at 34°C under agitation for 24 hours. The solid oil content (Y) then was 9.8%. Accordingly, the (X-Y) value then was 3.0 (Table 1).

### <Fractionation step>

The oil after crystallization was filtered in a filter press at 3.0 MPa, to give a liquid oil. The liquid oil was deodorized at 240°C under a reduced pressure of 200 Pa, to give an oil composition 2. The yield and the triglyceride composition of the oil composition 2 obtained are summarized in Table 1.

### (Example 3)

### <Production process for oil containing SSSs in an amount of 35 wt % or more>

An oil obtained by mixing 80 wt parts of palm stearin (iodine value: 34), 10 wt parts of an extremely hardened rapeseed oil and 10 wt parts of rapeseed oil and interesterifying the mixture with a lipase (Lipozyme TL-IM manufactured by Novozymes) was hated to 70°C for complete solubilization and crystallized at 42°C under agitation for 24 hours. The oil after crystallization was filtered in a filter press at 3.0 MPa, to give a solid oil containing SSSs at a rate of 42 wt % (containing palmitic acid at a rate of 55 wt %) and a liquid oil.

### <Production process for oil mixture>

40 wt parts of the solid oil thus obtained was mixed with 60 wt parts of an oil having an iodine value of 46 (mixed oil of rapeseed oil, palm stearin, and extremely hardened rapeseed oil at a weight rate of 21:70:9), to give an oil mixture (S content: 63 wt %, U content: 36 wt %).

### <Interesterification step with lipase>

The oil mixture was interesterified with a lipase (Lipozyme TL-IM manufactured by Novozymes), to give an oil A3. The SSS content (X) in the oil A3 was 23.6 wt%.

### <Crystallization step>

The oil A3 was heated to 70°C for completely solubilization and crystallized at 42°C under agitation for 24 hours. The solid oil content (Y) then was 14.9%. Accordingly, the (X-Y) value then was 8.7% (Table 1).

### <Fractionation step>

The oil after crystallization was filtered in a filter press at 3.0 MPa, to give a liquid oil. The liquid oil was deodorized at 240°C under a reduced pressure of 200 Pa, to give oil composition 3. The yield and the triglyceride composition of the oil composition 3 obtained are summarized in Table 1..

### (Example 4)

### <Production process for oil containing SSSs in an amount of 35 wt % or more>

An oil obtained by solubilizing palm stearin (iodine value: 34) and interesterifying the oil with a lipase (Lipozyme TL-IM manufactured by Novozymes) was heated to 70°C for complete solubilization and crystallized at 46°C under agitation for 24 hours. The oil after crystallization was filtered in a filter press at 3.0 MPa, to give a solid oil containing SSSs at 78 wt % (containing palmitic acid at a rate of 80 wt %) and a liquid oil.

### <Production process for oil mixture>

25 wt parts of the solid oil thus obtained was mixed with 75 wt parts of an oil having an iodine value of 41 (mixed oil of palm oil and palm stearin at a weight ratio of 43:57), to give an oil mixture (S content: 65 wt %, U content: 33 wt %).

### <Interesterification step with lipase>

The oil mixture was interesterification with a lipase (Lipozyme TL-IM manufactured by Novozymes), to give an oil A4. The SSS content (X) in the oil A4 was 24.3 wt %.

### <Crystallization step>

The oil A4 was heated to 70°C for completely solubilization and crystallized at 46°C under agitation for 24 hours. The solid oil content (Y) then was 14.2%. Accordingly, the (X-Y) value then was 10.1 (Table 1).

### <Fractionation step>

The oil after crystallization was filtered in a filter press at 3.0 MPa, to give a solid oil containing SSSs in an amount of 79 wt % and a liquid oil. The liquid oil was deodorized at 240°C under a reduced pressure of 200 Pa, to give oil composition 4. The yield and the triglyceride composition of the oil composition 4 obtained are summarized in Table 1.

### <Recycle step of solid oil>

25 wt parts of the solid oil thus obtained was mixed with 75 wt parts of an oil having an iodine value of 41 (mixed oil of palm oil and palm stearin at a weight ratio of 43:57), to give an oil mixture (S content: 65 wt %, U content: 33 wt %). The oil mixture was interesterified with a lipase (Lipozyme TL-IM manufactured by Novozymes), to give an oil A4'. The SSS content (X) in the oil A4' was 24.7 wt %.

The oil A4' was heated to 70°C for completely solubilization and crystallized at 44°C under agitation for 24 hours. The solid oil content (Y) then was 16.2%. Accordingly, the (X-Y) value then was 8.5 (Table 1). The oil after crystallization was filtered in a filter press at 3.0 MPa, to give a solid oil containing SSSs at 76 wt % and a liquid oil. The liquid oil was deodorized at 240°C under a reduced pressure of 200 Pa, to give an oil composition 4'. The yield and the triglyceride composition of the oil composition 4' obtained are summarized in Table 1.

### (Example 5)

### <Production process for oil containing SSSs in an amount of 35 wt % or more>

An oil obtained by solubilizing palm oil (iodine value: 51) and interesterifying it with a lipase (Lipozyme TL-IM manufactured by Novozymes) was heated to 70°C for complete solubilization and crystallized at 37°C under agitation for 24 hours. The oil after crystallization was filtered in a filter press at 3.0 MPa, to give a solid oil containing SSSs at 75 wt % (containing palmitic acid at 75 wt %) and a liquid oil.

### <Production process for oil mixture>

14 wt parts of the solid oil thus obtained was mixed with 86 wt parts of an oil having an iodine value of 56 (mixed oil of palm oil and palm double olein at a weight ratio of 40:60), to give an oil mixture (S content: 50 wt %, U content: 48 wt %).

### <Interesterification step with lipase>

The oil mixture was interesterified with a lipase (Lipozyme TL-IM manufactured by Novozymes), to give an oil A5. The SSS content (X) in the oil A5 was 11.0 wt %.

### <Crystallization step>

The oil A5 was heated to 70°C for completely solubilization and crystallized at 37°C under agitation for 24 hours. The solid oil content (Y) then was 8.5%. Accordingly, the (X-Y) value then was 2.5 (Table 1).

### <Fractionation step>

The oil after crystallization was filtered in a filter press at 3.0 MPa, to give a solid oil containing SSSs at 76 wt % and a liquid oil. The liquid oil was deodorized at 240°C under a reduced pressure of 200 Pa, to give an oil composition 5. The yield and the triglyceride composition of the oil composition 5 obtained are summarized in Table 1.

### <Recycle step of solid oil>

14 wt parts of the solid oil thus obtained was mixed with 75 wt parts of an oil having an iodine value of 56 (mixed oil of palm oil and palm double olein at a weight ratio of 40:60), to give an oil mixture (S content 50 wt %, U content 48 wt %). The oil mixture was interesterified with a lipase (Lipozyme TL-IM manufactured by Novozymes), to give an oil A5'. The SSS content (X) in the oil A5' was 10.5 wt %.

The oil A5' was heated to 70°C for completely solubilization and crystallized at 37°C under agitation for 24 hours. The solid oil content (Y) then was 8.3%. Accordingly, the (X-Y) value then was 2.2 (Table 1). The oil after crystallization was filtered in a filter press at 3.0 MPa, to give a solid oil containing SSSs at 75 wt % and a liquid oil. The liquid oil was deodorized at 240°C under a reduced pressure of 200 Pa, to give an oil composition 5'. The triglyceride composition of the oil composition 5' obtained is shown in Table 1.

**[Table 1]**

| Composition of oils | | | | | | | | | | | | | | | | | |
|---|---|---|---|---|---|---|---|---|---|---|---|---|---|---|---|---|---|
| | | Example 1 | | | | Example 2 | | Example 3 | | Example 4 | | | | Example 5 | | | |
| | | Oil A1 | Oil composition 1 | Oil A1' | Oil composition 1' | Oil A2 | Oil composition 2 | Oil A3 | oil composition 3 | Oil A4 | Oil composition 4 | Oil A4' | Oil composition 4' | Oil A5 | Oil composition 5 | Oil A5' | Oil composition 5' |
| Measured values | SSS content (X value, wt %) | 13.4 | 5.1 | 13.1 | 5.1 | 12.8 | 3.2 | 23.6 | 8.5 | 24.3 | 8.9 | 24.7 | 5.9 | 11.0 | 2.2 | 10.5 | 2.1 |
| | SSSISUS content (wt %) | 38.4 | 45.2 | 38.2 | 43.8 | 35.2 | 38.8 | 40.5 | 47.8 | 39.3 | 48.5 | 39.0 | 49.6 | 33.5 | 37.5 | 33.2 | 37.4 |
| | (SSU+SUS)/SSS weight ratio | 2.9 | 8.9 | 2.9 | 8.6 | 2.8 | 12.1 | 1.7 | 5.6 | 1.6 | 5.4 | 1.6 | 8.4 | 3.0 | 17.0 | 3.2 | 17.8 |
| | SSU/SUS weight ratio | 2.0 | 2.0 | 2.0 | 2.0 | 2.0 | 2.0 | 1.9 | 1.9 | 1.8 | 1.8 | 1.9 | 1.9 | 1.8 | 1.8 | 1.9 | 1.9 |
| | Solid oil content during crystallization (Y value, %) | 8.6 | - | 8.3 | - | 9.8 | - | 14.9 | - | 14.2 | - | 16.2 | - | 8.5 | - | 8.3 | - |
| | (X-Y) value | 4.8 | - | 4.8 | - | 3.0 | - | 8.7 | - | 10.1 | - | 8.5 | - | 2.5 | - | 2.2 | - |
| Evaluation | Color (10R+Y value) | - | 9 | - | - 9 | - | 21 | - | 21 | - | 22 | - | 22 | - | 24 | - | 24 |
| | CDM test (induction period, hr) | - | 14.6 | - | 14.4 | - | 16.3 | - | 19.5 | - | 19.8 | - | 19.5 | - | 15.3 | - | 14.9 |
| | Tasfe and mouth molting characteristics oil | - | B | | B | - | B | - | B | - | B | | B | - | B | - | B |
| Yield of oil composition (wt %) | | | 85 | | | | 60 | | 60 | | 75 | | | | 86 | | |

### (Comparative Example 1)

### <Production process for oil containing SSSs in an amount of 35 wt % or more>

An oil obtained by heating 50 wt parts of an extremely hardened rapeseed oil and 50 wt parts of rapeseed oil to 90°C under a reduced pressure of 500 Pa, adding thereto 0.2 wt part of sodium methylate and interesterifying the mixture was deodorized over 2 wt parts of white earth at 90°C under a reduced pressure of 500 Pa. The oil was heated to 70°C for complete solubilization and crystallized at 49°C under agitation over a period of 24 hours. The oil after crystallization was filtered in a filter press at 3.0 MPa, to give a solid oil containing SSSs at 78 wt % and a liquid oil.

### <Production process for oil mixture>

15 wt parts of the solid oil thus obtained was mixed with 85 wt parts of an oil having an iodine value of 53 (mixed oil of an extremely hardened rapeseed oil and rapeseed oil at a weight ratio of 44:56), to give an oil mixture (S content: 52 wt %, U content: 48 wt %).

### <Interesterification step with sodium methylate>

The oil mixture was interesterified with sodium methylate and decolorized under a condition similar to that described above, to give an oil A6. The SSS content (X) in the oil A6 was 13.1 wt %.

### <Crystallization and fractionation steps>

The oil A6 was heated to 70°C for complete solubilization and crystallized at 49°C under agitation for 24 hours.

The oil after crystallization was filtered in a filter press at 3.0 MPa, to give a liquid oil. The liquid oil was deodorized at 240°C under a reduced pressure of 200 Pa, to give oil composition 6. The triglyceride composition of the oil composition 6 obtained is shown in Table 2.

### (Comparative Example 2)

### <Production process for oil containing SSSs in an amount of 35 wt % or more>

An oil obtained by solubilizing palm oil (iodine value: 51) and interesterifying it with sodium methylate was heated to 70°C for complete solubilization and crystallized at 37°C under agitation for 24 hours. The oil after crystallization was filtered in a filter press at 3.0 MPa, to give a solid oil containing SSSs at a rate of 75 wt % (containing palmitic acid at 75 wt %) and a liquid oil.

### <Production process for oil mixture>

14 wt parts of the solid oil thus obtained was mixed with 86 wt parts of an oil having an iodine value of 56 (mixed oil of palm oil and palm double olein at a weight ratio of 40:60), to give an oil mixture (S content: 50 wt %, U content: 48 wt %).

### <Interesterification step with sodium methylate>

The oil mixture was interesterified with sodium methylate, to give an oil A7. The SSS content (X) in the oil A7 was 11.0 wt %.

### <Crystallization and fractionation steps>

The oil A7 was heated to 70°C for complete solubilization and crystallized at 37°C under agitation for 24 hours. The solid oil content (Y) then was 8.5%. Accordingly, the (X-Y) value then was 2.5 (Table 2). The oil after crystallization was filtered in a filter press at 3.0 MPa, to give a solid oil containing SSSs at 76 wt % and liquid oil. The liquid oil was deodorized at 240°C under a reduced pressure of 200 Pa, to give an oil composition 7. The yield and the triglyceride composition of the oil composition 7 obtained are summarized in Table 2.

### <Recycle step of solid oil>

14 wt parts of the solid oil thus obtained was mixed with 75 wt parts of an oil having an iodine value of 56 (mixed oil of palm oil and palm double olein at a weight ratio of 40:60), to give an oil mixture (S content: 50 wt %, U content: 48 wt %). The oil mixture was interesterified with sodium methylate, to give an oil A7'. The SSS content (X) of the oil A7' was 10.5 wt %. The oil A7' was heated to 70°C for complete solubilization and crystallized at 37°C under agitation for 24 hours. The solid oil content (Y) then was 8.3%. Accordingly, the (X-Y) value then was 2.2 (Table 2).

The oil after crystallization was filtered in a filter press at 3.0 MPa, to give a solid oil containing SSSs at 75 wt % and a liquid oil. The liquid oil was deodorized at 240°C under a reduced pressure of 200 Pa, to give an oil composition 7'. The triglyceride composition in the oil composition 7' obtained is shown in Table 2. As in Comparative Examples 1 and 2, when the interesterification step for preparation of oil composition is carried out by a chemical method (interesterification with a chemical catalyst), the color, taste, and mouth melting characteristics of the oil compositions obtained deteriorated.

### (Comparative Example 3)

An oil obtained by solubilizing palm stearin (iodine value: 34) and interesterifying it with a lipase (Lipozyme TL-IM manufactured by Novozymes) was heated to 70°C for complete solubilization and crystallized at 46°C under agitation for 24 hours. The oil after crystallization was filtered in a filter press at 3.0 MPa, to give a solid oil containing SSSs at 78 wt % (containing palmitic acid at 80 wt %) and a liquid oil.

25 wt parts of the solid oil thus obtained was mixed with 75 wt parts of an oil having an iodine value of 41 (mixed oil of palm oil and palm stearin at a weight ratio of 43:57), to give an oil mixture (S content: 65 wt %, U content: 33 wt %). The oil mixture was interesterified with a lipase (Lipozyme TL-IM manufactured by Novozymes), to give an oil A8. The SSS content (X) of the oil A8 was 24.3 wt %. The oil A8 was heated to 70°C for complete solubilization and crystallized at 38°C under agitation for 5 hours. The solid oil content (Y) then was 24.0%. Accordingly, the (X-Y) value then was 0.3 (Table 2).

The oil after crystallization was filtered in a filter press at 3.0 MPa, to give a solid oil containing SSSs at 71 wt % and a liquid oil. The liquid oil was deodorized at 240°C under a reduced pressure of 200 Pa, to give an oil composition 8. The yield and the triglyceride composition of the oil composition 8 obtained are summarized in Table 2. As in Comparative Example 3, the yield of the oil composition declined significantly when the (X-Y) value is less than 2.

### (Comparative Example 4)

An oil obtained by solubilizing palm stearin (iodine value: 34) and interesterifying it with a lipase (Lipozyme TL-IM manufactured by Novozymes) was heated to 70°C for complete solubilization and crystallized at 46°C under agitation for 24 hours. The oil after crystallization was filtered in a filter press at 3.0 MPa, to give a solid oil containing SSSs at 78 wt % (containing palmitic acid at 80 wt %) and a liquid oil. 25 wt parts of the solid oil thus obtained was mixed with 75 wt parts of an oil having an iodine value of 41 (mixed oil of palm oil and palm stearin at a weight ratio of 43:57), to give an oil mixture (S content: 65 wt %, U content: 33 wt %).

The oil mixture was interesterified with a lipase (Lipozyme TL-IM manufactured by Novozymes), to give an oil A9. The SSS content (X) of the oil A9 was 24.3 wt %. The oil A9 was heated to 70°C for complete solubilization and crystallized at 49°C under agitation for 24 hours. The solid oil content (Y) then was 7.5%. Accordingly, the (X-Y) value then was 16.8 (Table 2). The oil after crystallization was filtered in a filter press at 3.0 MPa, to give a solid oil containing SSSs at 80 wt % and a liquid oil. The liquid oil obtained was deodorized at 240°C under a reduced pressure of 200Pa, to give an oil composition 9. The yield and the triglyceride composition of the oil composition 9 obtained are summarized in Table 2. As in Comparative Example 4, the mouth melting characteristics of the oil composition obtained declined significantly, when the (X-Y) value is over 13.

**[Table 2]**

| Composition of oils | | | | | | | | | | | |
|---|---|---|---|---|---|---|---|---|---|---|---|
| | | Comparative Examples 1 | | Comparative Example 2 | | | | Comparative Examples 3 | | Comparative Example 4 | |
| | | Oil A6 | Oil composition 6 | Oil A7 | Oil composition 7 | Oil A7' | Oil composition 7' | Oil A8 | Oil composition 8 | Oil A9 | Oil composition 9 |
| Measured values | SSS content (X value, wt %) | 13.1 | 5.3 | 11.0 | 2.2 | 10.5 | 2.1 | 24.3 | 0.7 | 24.3 | 15.0 |
| | SSS+SUS content (wit%) | 39.1 | 45.4 | 33.5 | 37.5 | 33.2 | 37.4 | 39.3 | 51.9 | 39.3 | 43.7 |
| | (SSU+SUS)/SSS weight ratio | 3.0 | 8.6 | 3.0 | 17.0 | 32 | 17.8 | 1.6 | 74.1 | 1.6 | 2.9 |
| | SSU/SUS weight ratio | 2.0 | 2.0 | 1.8 | 1.8 | 1.9 | 1.9 | 1.8 | 1.8 | 1.8 | 1.8 |
| | Solid oil content during crystallization (Y value, %) | 8.9 | - | 8.5 | - | 8.3 | - | 24.0 | - | 7.5 | - |
| | (X-Y) value | 4.2 | - | 2.5 | - | 2.2 | - | 0.3 | - | 16.8 | - |
| Evaluation | Color (10R+Y value) | - | 13 | - | 27 | - | 29 | - | 23 | - | 21 |
| | CDM test (induction period, hr) | - | 12.3 | - | 13.1 | - | 11.9 | - | 18.7 | - | 20.3 |
| | Taste and mouth melting characteristics of oil | - | C | - | C | - | C | - | B | - | D |
| Yield of oil composition (wt %) | | | 85 | | 86 | | | | 60 | | 88 |

## Claims

1. A method for producing a trisaturated fatty acid glyceride-containing oil composition with SSSs in an amount of 2 to13 wt % and SSUs and SUSs in a total amount of 34 to 54 wt % in the entire oil composition and having a (total content of SSU and SUS)/SSS content ratio (by weight) of 4 to 20 and a SSU content/SUS content weight ratio of 1 or more,
comprising:
a step (1) of preparing an oil mixture containing saturated fatty acids (S) in an amount of 45 to 75 wt % and unsaturated fatty acids (U) in an amount of 25 to 55 wt % in all constituent fatty acids by mixing an oil containing SSSs in an amount of 35 wt % or more with an oil having an iodine value of 35 or more;
a step (2) of interesterifying the oil mixture with a lipase;
a step (3) of obtaining an oil containing liquid and solid oils by crystallizing the oil mixture without use of solvent until the difference (X minus Y) between the SSS content (X, wt %) of the oil after interesterification and the solid oil content (Y, %) during crystallization becomes 2 to13; and
a step (4) of separating the liquid oil by fractionation of the oil,
(wherein,
SSS represents a trisaturated fatty acid glyceride;
SSU represents a 1,2-disaturated fatty acid-3-monounsaturated fatty acid glyceride (including the optical isomers thereof);
SUS represents a 1,3-disaturated fatty acid-2-monounsaturated fatty acid glyceride); and
the solid oil content during crystallization is determined with a Minispec series mq20 NMR Analyzer (analytical software: BRUKER the MINISPEC) on a sample of the oil that has been pipetted into a test tube pre-heated to a temperature identical with the crystallization temperature.

2. The method for producing a trisaturated fatty acid glyceride-containing oil composition according to Claim 1, wherein palmitic acid (P) is contained in an amount of 50 wt % or more in all constituent fatty acids in the oil containing SSSs in an amount of 35 wt % or more.

3. The method for producing a trisaturated fatty acid glyceride-containing oil composition according to Claim 1 or 2, wherein the oil having an iodine value of 35 or more is an oil containing palm oil and/or a fractionated palm oil in an amount of 60 wt % or more.

4. The method for producing a trisaturated fatty acid glyceride-containing oil composition according to any one of Claims 1 to 3, wherein the solid oil separated by fractionation in step (4) is used as the oil containing SSSs in an amount of 35 wt % or more.

## Patentansprüche

1. Verfahren zum Herstellen einer dreifach gesättigtes Fettsäureglycerid enthaltenden Ölzusammensetzung mit SSS in einer Menge von 2 bis 13 Gew.-% und SSU und SUS in einer Gesamtmenge von 34 bis 54 Gew.-% in der gesamten Ölzusammensetzung, die ein (Gesamtgehalt an SSU und SUS)/SSS-Gehaltsverhältnis (in Gewicht) von 4 bis 20 und ein SSU-Gehalt/SUS-Gehalt-Gewichtsverhältnis von 1 oder mehr aufweist,
umfassend:
einen Schritt (1) des Herstellens einer Ölmischung enthaltend gesättigte Fettsäuren (S) in einer Menge von 45 bis 75 Gew.-% und ungesättigte Fettsäuren (U) in einer Menge von 25 bis 55 Gew.-% bezogen auf alle enthaltenen Fettsäuren durch Mischen eines Öls enthaltend SSS in einer Menge von 35 Gew.-% oder mehr mit einem Öl, das einen Iodwert von 35 oder mehr aufweist;
einen Schritt (2) des Untereinanderumesterns der Ölmischung mit einer Lipase;
einen Schritt (3) des Erhaltens eines Öls enthaltend flüssige und feste Öle durch Kristallisieren der Ölmischung ohne Verwendung von Lösungsmitteln, bis der Unterschied (X minus Y) zwischen dem SSS-Gehalt (X, Gew.-%) des Öls nach dem untereinander umestern und dem Gehalt an festem Öl (Y, %) während der Kristallisation 2 bis 13 annimmt; und
einen Schritt (4) des Abtrennens des flüssigen Öls durch Fraktionierung des Öls
(worin
SSS ein dreifach gesättigtes Fettsäureglycerid darstellt;
SSU ein 1,2-zweifach gesättigte Fettsäure-3-einfach ungesättigte Fettsäure-Gylcerid einschließlich optischer Isomere davon darstellt;
SUS ein 1,3-zweifach ungesättigte Fettsäure-2-einfach ungesättigte Fettsäure-Glycerid darstellt); und
der Gehalt an festem Öl während der Kristallisation mit einem mq20-NMR-Analyzer der Minispec-Serie (Analysesoftware: BRUKER the MINISPEC) an einer Probe des Öls bestimmt wird, die in ein Analyseröhrchen pipettiert worden ist, das auf eine Temperatur vorgeheizt worden ist, die mit der Kristallisationstemperatur identisch ist.

2. Verfahren zum Herstellen einer dreifach gesättigtes Fettsäureglycerid enthaltenden Ölzusammensetzung gemäß Anspruch 1, worin Palmitinsäure (P) in dem Öl enthaltend SSS in einer Menge von 35 Gew.-% oder mehr in einer Menge von 50 Gew.-% oder mehr bezogen auf alle enthaltenen Fettsäuren enthalten ist.

3. Verfahren zum Herstellen einer dreifach gesättigtes Fettsäureglycerid enthaltenden Ölzusammensetzung gemäß Anspruch 1 oder 2, worin das Öl mit einem Iodwert von 35 oder mehr ein Öl ist, das Palmöl und oder fraktioniertes Palmöl in einer Menge von 60 Gew.-% oder mehr enthält.

4. Verfahren zum Herstellen einer dreifach gesättigtes Fettsäureglycerid enthaltenden Ölzusammensetzung gemäß einem der Ansprüche 1 bis 3, worin das feste Öl, das in Schritt (4) durch Fraktionierung abgetrennt wird als das Öl verwendet wird, das SSS in einer Menge von 35 Gew.-% oder mehr enthält.

## Revendications

1. Procédé de production d'une composition d'huile contenant des glycérides d'acides gras trisaturés avec des SSS présents en une quantité allant de 2 à 13% en poids et des SSU et des SUS présents en une quantité totale allant de 34 à 54% en poids dans la composition d'huile entière et ayant un rapport de (teneur totale en SSU et SUS)/teneur en SSS (en poids) allant de 4 à 20 et un rapport en poids de teneur en SSU/teneur en SUS supérieur ou égal à 1,
comprenant :
une étape (1) consistant à préparer un mélange d'huiles contenant des acides gras saturés (S) en une quantité allant de 45 à 75% en poids et des acides gras insaturés (U) en une quantité allant de 25 à 55% en poids de tous les acides gras constitutifs en mélangeant une huile contenant des SSS en une quantité supérieure ou égale à 35% en poids avec une huile ayant un indice d'iode supérieur ou égal à 35 ;
une étape (2) consistant à interestérifier le mélange d'huiles avec une lipase ;
une étape (3) consistant à obtenir une huile contenant des huiles liquide et solide en cristallisant le mélange d'huiles sans utiliser un solvant jusqu'à ce que la différence (X moins Y) entre la teneur en SSS (X, % en poids) de l'huile après l'interestérification et la teneur en huile solide (Y, %) pendant la cristallisation devienne entre 2 et 13 ; et
une étape (4) consistant à séparer l'huile liquide par fractionnement de l'huile,
(où,
SSS représente un glycéride d'acides gras trisaturé ;
SSU représente un glycéride d'acides gras 1,2-disaturé-d'acides gras 3-monoinsaturé (y compris les isomères optiques de celui-ci) ;
SUS représente un glycéride d'acides gras 1,3-disaturé-d'acides gras 2-monoinsaturé ; et
la teneur en huile solide pendant la cristallisation est déterminée par un analyseur RMN Minispec series mq20 (logiciel analytique : BRUKER the MINISPEC) sur un échantillon de l'huile qui a été pipetée dans un tube à essai préchauffé à une température identique à la température de cristallisation.

2. Procédé de production d'une composition d'huile contenant des glycérides d'acides gras trisaturés selon la revendication 1, dans lequel l'acide palmitique (P) est présent en une quantité supérieure ou égale à 50% en poids de tous les acides gras constitutifs dans l'huile contenant des SSS en une quantité supérieure ou égale à 35% en poids.

3. Procédé de production d'une composition d'huile contenant des glycérides d'acides gras trisaturés selon la revendication 1 ou 2, dans lequel l'huile ayant un indice d'iode supérieur ou égal à 35 est une huile contenant l'huile de palme et/ou l'huile de palme fractionnée en une quantité supérieure ou égale à 60% en poids.

4. Procédé de production d'une composition d'huile contenant des glycérides d'acides gras trisaturés selon l'une quelconque des revendications 1 à 3, dans lequel l'huile solide séparée par fractionnement dans l'étape (4) est utilisée comme étant l'huile contenant des SSS en une quantité supérieure ou égale à 35% en poids.
